Europäisches Patentamt

(19)    European Patent Office

        Office européen des brevets

(11)    EP 0 954 142 A1

## (12) EUROPEAN PATENT APPLICATION

(43) Date of publication:
     03.11.1999 Bulletin 1999/44

(51) Int. Cl.⁶: $H04L\ 25/02$

(21) Application number: 98303326.7

(22) Date of filing: 28.04.1998

(84) Designated Contracting States:
     AT BE CH CY DE DK ES FI FR GB GR IE IT LI LU
     MC NL PT SE
     Designated Extension States:
     AL LT LV MK RO SI

(71) Applicant:
     LUCENT TECHNOLOGIES INC.
     Murray Hill, New Jersey 07974-0636 (US)

(72) Inventors:
     • Luschi, Carlo
       Oxford, Oxfordshire, OX1 1TX (GB)
     • Yan, Ran-Hong
       Marlborough, Wiltshire, SN8 1XB (GB)
     • Speight, Timothy James
       Clifton, Bristol, BS8 1AA (GB)

(74) Representative:
     Funnell, Samantha Jane et al
     Lucent Technologies UK Limited,
     5 Mornington Road
     Woodford Green, Essex IG8 0TU (GB)

(54)    **Channel estimation using a sliding window technique**

(57)     The invention provides a method for channel estimation in mobile radio communications which adaptively compensates for channel distortion on a block-by-block basis. The discrete-time channel impulse response is initially estimated with a given length and then truncated by using a sliding window. A cost function associated with the window is measured as the length and position of the window is adjusted over the channel impulse response and the cost function is compared with a threshold. The invention provides means to and a method for adaptively adjusting the length of the window $L_T$ and the corresponding number of states in the equalizer, $2^{L_T}$ - 1 if appropriate.

EP 0 954 142 A1

**Description**

This invention relates to channel estimation methods and apparatus in mobile radio communications and in particular to a receiver which adaptively compensates for channel distortion on a block-by-block basis.

In digital mobile radio communications, transmission channels suffer from severe distortion due to frequency selective fading. In addition, channel characteristics are normally time-varying due to the relative motion of fixed and mobile stations. Therefore, in order to allow for reliable transmission, the receiver must be able to estimate and compensate for channel distortion on a block-by-block basis.

Various channel estimation and channel equalization methods have been proposed in literature and are commonly used in practical systems such as mobile cellular communication systems employing the European wireless digital cellular standard "GSM". In most cases the receiver performs channel equalization on the received signal using Maximum Likelihood (ML) or Maximum A Posteriori (MAP) probability data estimation, based on the knowledge of the Channel Impulse Response (CIR). Most practical systems employ training sequences to enable the CIR to be estimated before the equalizer star-up. Fast time varying, fading channels require the changing channel response to be tracked and adjusted dynamically by the receiver for the duration of the received signal. Tracking of the CIR may be performed by means of decision directed algorithms, where tentative decisions from the equalizer are used to update the initial CIR estimate. Examples of receiver systems which perform channel estimation and channel equalization may be found in the following articles: "Bit Synchronisation and Timing Sensitivity in Adaptive Viterbi Equalizers for Narrowband TDMA Digital Mobile Radio Systems", A. Baier, G. Heinrich and U. Wellens, Proc. IEEE Vehicular Technology Conference, June 1988, pp 377-384 [Reference 1]; "Correlative and Iterative Channel Estimation in Adaptive Viterbi Equalizers for TDMA Mobile Radio", ITG-Fachbericht No. 107, VDE Verlag, April 1989, pp 363-368 [Reference 2]; "Simulation and Hardware Implementation of a Viterbi Equalizer for the GSM TDMA Digital Mobile Radio System", A. Baier, G. Heinrich, P. Shoeffel and W. Stahl, Proc. 3rd Nordic Seminar on Digital Land Mobile Radio Communications, September 1988 pp 13.7.1 - 13.7.5, [Reference 3].

An equalizer of a given complexity can only cope with a certain delay spread of signal paths. Therefore, the estimated CIR is usually truncated and this truncated CIR estimate is used in a reduced state equalizer, of the type described in "Mobile Radio Communications" by R. Steels, pub. By Rentech Press and IEEE Press, pp 560-575. The reduced state equalizer selects an appropriate segment of the estimated CIR by sliding a window of length $L_T$ over the whole estimated response, calculating the energy contained within the window at each window position and identifying the window position where the energy within the window is maximum.

However, if the actual CIR is either longer or shorter than $L_T$ samples, the above approach results in a degradation of the equalizer performance. In fact, as it is intuitive, assuming a channel response shorter than required produces a residual ISI which will affect the data estimation. On the other hand, assuming an impulse response longer than necessary means making use of one or more taps of the estimates channel which are essentially noise. There is thus a requirement for a reduced-state equalizer which provides improved equalizer performance.

According to a first aspect of the invention there is provided a method of estimating channel impulse response in a communication system comprising:

initially estimating the discrete-time channel impulse response with a given discrete length; and
truncating the channel impulse response by using a sliding window, and characterised in that a cost function associated with the window is measured as the length and position of the window is adjusted over the channel impulse response and the said cost function is compared with a threshold.

The overall performance of the equalizer is improved by neglecting the portion of the estimated CIR which is likely to correspond to just estimation noise.

The invention provides means to and a method for adaptively adjusting the length of the window $L_T$ and the corresponding number of states in the equalizer,

$$2^{L_T} - 1$$

if appropriate. This may be achieved by computing a cost function for different lengths and positions of the window, for example by measuring the out-of-window power for each window, and comparing that cost with a suitable threshold.

Once L samples CIR have been obtained by standard means, the position of the truncated CIR of different lengths $L_T$ is then obtained by performing several maximum energy searches based on sliding windows of length $L_T$. For each window length, the out-of-window energy of the estimated CIR is compared with a suitable threshold. The threshold may be fixed, or it may be obtained from a previous estimate of the SNR (based on the non-truncated channel estimate). The invention may also be implemented by comparing the energy of the individual CIR taps with a suitable threshold. Again, the threshold may be fixed, or it may be obtained from a previous estimate of the SNR (based on the non-truncated channel estimate).

A detailed description of a practical digital radio receiver is described below, by way of example, and with reference to the following figures in which:

Figure 1 shows in outline a typical GSM digital radio receiver;
Figure 2 illustrates the GSM "normal" burst format;
Figure 3 illustrates a sliding window;

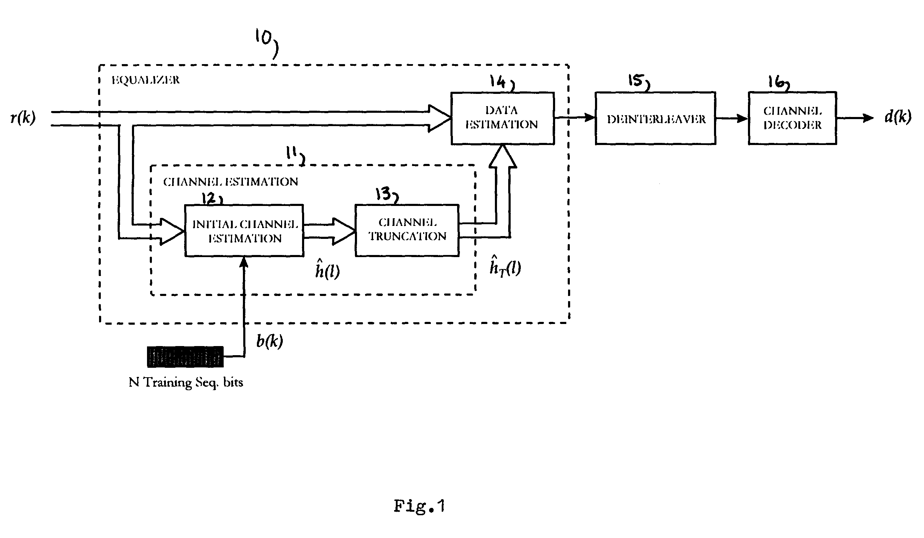

A typical implementation of a digital radio receiver is shown in Figure 1 and comprises an equalizer 10, deinterleaver 15 and a channel decoder 16. The equalizer includes a channel estimator 11 and data estimator 14. The channel estimator includes an initial channel estimator 12 and a channel truncator 13.

The discrete-time received signal as received by the equalizer can be written as

$$r(k) = \sum_l b(k-l)h(l) + n(k) \qquad (1)$$

where $b(k) \in \{-1,1\}$ are the transmitted data symbols or the (known) training sequence symbols, $h(l)$ $l$ = 1, 2,..., L represents the taps of the Channel Impulse Response (CIR) and $n(k)$ indicates white Gaussian noise with zero mean and variance $\sigma^2$.

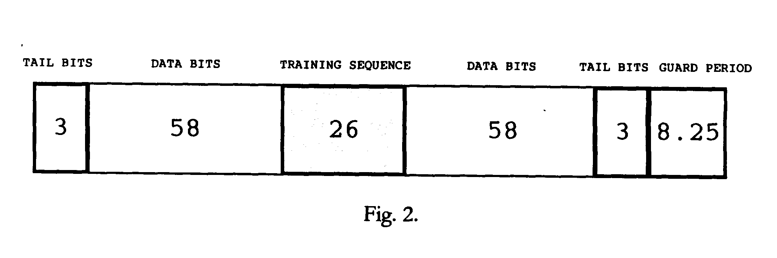

The equalizer must first estimate (12) the CIR $\hat{h}(l)$, before beginning the data estimation process (14). In some cases, e.g. in a GSM standard receiver, the initial CIR estimation is commonly performed by means of correlative channel sounding, see for example the above mentioned references 1 and 3. The taps of the CIR estimate are obtained by correlating the received signal $r(k)$ with N=16 bits $b(k)$ out of the 26 bits of training sequence, shown in figure 2, and represented by:

$$\hat{h}(l) = (1/N)\Sigma_i b(i) r(l+i) \qquad (2)$$

where

$$i = 0, 1, ... N-1;$$

The initial CIR estimate can generally be performed by ML channel estimation, giving:

$$\hat{h} = [\hat{h}(0), \hat{h}(1),...,\hat{h}(L-1)]^T = (\mathbf{B'B})^{-1}\mathbf{B}^T\mathbf{r} \qquad (3)$$

where

$$\mathbf{r} = [r(0), r(1),...,r(N-1)]^T$$

$$\mathbf{B} = [\mathbf{b}(0), \mathbf{b}(1),...\mathbf{b}(N-1)]^T$$

$$b(i) = [b(i), b(i-1),...,b(i-L+1)]^T$$

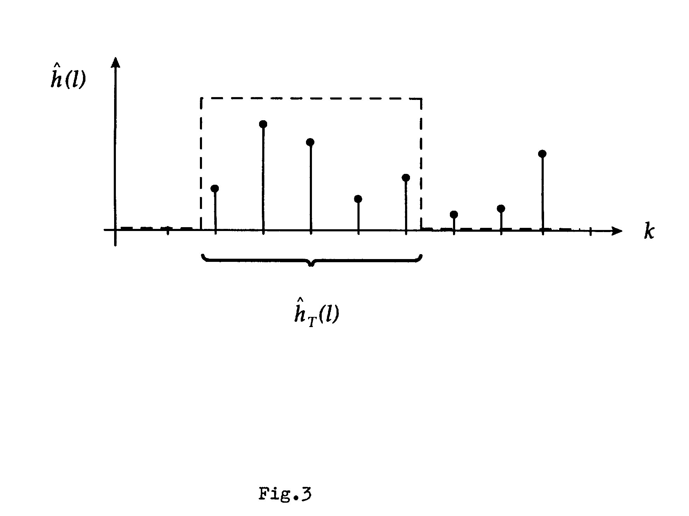

It can be seen that, due to the good autocorrelation properties of the GSM training sequence

$$\mathbf{B'B} \cong \mathbf{NI}$$

and equation 2 is the particular case of the more general ML technique (equation 3). Once L samples ($\hat{h}(l)$) of the CIR are estimated, an appropriate segment of samples ($\hat{h}_T(l)$ for $L_T < L$) is selected (in the channel truncator 13) by a maximum energy search based on a sliding window at length $L_T$, see reference 1, and as shown in figure 3. This approach produces a bit synchronisation with a resolution equal to the sampling period T and results in a reduced complexity equalizer with a trellis of

$$2^{L_T-1}$$

states.

Assuming that for the training sequence bits b(k)

$$R_{bb}(k) = \Sigma_i b(i) b(k+i) = N\delta_{k,0}, \tag{4}$$

substituting (1) in (2) yields

$$\hat{h}(l) = h(l) + v(l), \qquad l = 0, 1, ..., L-1. \tag{5}$$

where

$$v(l) = \frac{1}{N} \sum_{i=0}^{N-1} b(i) n(l+i) \qquad i = 0, 1, ... N-1, \tag{6}$$

Suppose that $L_T$ taps of $\hat{h}(1)$ are selected as a CIR estimate $\hat{h}_T(l)$, when the actual channel response is shorter than $L_T$ bit intervals. From (5), it is clear that if $h(l) = 0$ for some index l, the corresponding sample $\hat{h}_T(l)$ is just noise, and its use can only degrade the equalizer performance. An improvement may be achieved by adaptively adjusting the parameter $L_T$ on a block-by-block basis, and consequently adjusting the number of states

$$2^{L_T-1}$$

of the equalizer, in order to match the actual length of the channel impulse response.

A suitable cost function, such as the mean square error of the truncated channel estimate, may be used to estimate length of the actual CIR and is given by

$$J(l_0, L_T) = E\{\sum_{l=0}^{L-1} |h(l) - \hat{h}_T(l)|^2\}, \tag{7}$$

where $\hat{h}_T(l) = \hat{h}(l)$ for $l \in W = [l_0, l_0 + L_T - 1]$, and $\hat{h}_T(l) = 0$ for $l \notin W$. Taking into account (5), he above quantity can be written as

$$J(l_0, L_T) = \sum_{l \in W} E\{|v(l)|^2\} + \sum_{l \notin W} E\{|h(l)|^2\} \tag{8}$$

Therefore, choosing the value of ($l_0$, $L_T$) which minimises the cost (7) implies a trade-off between reducing the estimation noise and representing the relevant ISI terms. From (5) and (7) one finally obtains

$$J(l_0, L_T) = \sum_{l \in W} E\{|v(l)|^2\} + \sum_{l \notin W} |h(l)|^2 - \sum_{l \notin W} E\{|v(l)|^2\} \tag{9}$$

$$= (2L_T - L)E\{|v(l)|^2\} + \sum_{l \notin W} |\hat{h}(l)|^2$$

One can observe that, for a fixed window length $L_T$, minimising (9) is equivalent to the maximum energy search described above.

However, in comparing the cost associated with different window lengths $L_T$, the above approach requires an accurate estimate of the channel noise variance $\sigma^2$, to be employed to evaluate the mean squared value of the estimation error $v(k)$ as defined in (6). From this, as an alternative to (9), one can consider the following process. Assume that, for each window length $L_T$, the best window position $l_0$ is determined by a maximum energy search. Once a value of $l_0$ is associated with each length $L_T$, the best $L_T$ can be chosen by comparing the out-of-window energy

$$\sum_{l \in W} E\{|v(l)|^2\}$$

corresponding to the different values of $L_T$ with a suitable threshold. In the case where the out-of-window taps of the estimated channel do not contain any relevant ISI terms, using (5) and (6) and by denoting with $E_L$ and $E_{LT}$ the energy of $\hat{h}(l)$ and $\hat{h}_T(l)$ respectively, for signal-to-noise ratios

$$E_b/N_0 = (\sum_{l=0}^{L-1} |h(l)|^2)/\sigma^2 > \gamma$$

one has

$$E_L - E_{LT} = (L - L_T)(\sigma^2/N) < (L - L_T)(E_{LT}/\gamma N). \tag{10}$$

Therefore, for each burst, the quantity $E_L - E_{LT}$ is computed and the validity of (6) for different values of $L_T$ is checked. The lowest $L_T$ satisfying the inequality (6) is an estimate of the length of the actual channel response, and may be then used both as a length of the CIR and for setting the number of states in the equalizer.

The effectiveness of the invention has been asses by computer simulation for the case of a GSM receiver. The GMSK transmitted data symbols are obtained from the source bits by a rate 1:2 convolutionally encoding and interleaving , according to the GSM specifications for the TCH/FS class lb bits. At the receiver, the channel estimation is performed by using N=16 bits out of the 26-bits training sequence midamble of the GSM normal burst, according to (2). The original $L = 8$ taps estimate are then truncated to $L_T \le 6$ samples according to the rule (9) or (10). For data estimation, we employ a symbol-by-symbol Max-Log-MAP equalizer on the ISI trellis with state complexity

$$2^{L_T - 1}.$$

The equalizer soft-output data are deinterleaved and then fed to a symbol-by-symbol-Max-Log-MAP convolution channel decoder.

Two channel profiles from "Digital cellular telecommunications system (phase 2+): Radio transmission and reception." ETSI GSM 05.05 (version 5.2.0), July 1996 are considered. The first is the GSM typical urban area profile (TU50) with a relative speed of 50 Km/h and a delay spread of about 5μsec. The second propagation condition is the GSM typically hilly terrain profile (HT100), with a relative speed of 100Km/h and a delay spread of about 20μsec. Considering the GSM symbol interval T = 3.69 μsec, and taking into account that the GSMK pulse duration is about 3T, the above propagation conditions correspond to the two opposite cases where the invention provides a significant (TU conditions) and a negligible (HT conditions) performance improvement respectively.

To measure the performance of the different channel estimation algorithms, the means square error between the true and estimated channel responses are considered. In the case of the TU50 conditions, both strategies (9) and (10 produce a gain at the equalizer output and at the channel decoder output. For the HT100 profile, no significant improvement is achieved and the BER is similar to a conventional receiver.

**Claims**

1.  A method of estimating channel impulse response in a communication system comprising:

    initially estimating the discrete-time channel impulse response with a given length; and
    truncating the channel impulse response by using a sliding window, and characterised in that a cost function
    associated with the window is measured as the length and position of the window is adjusted over the channel
    impulse response and the said cost function is compared with a threshold.

2.  A method as claimed in claim 1 characterised in that the cost function is computed for each different length and/or
    position of the window.

3.  A method as claimed in claim 1 characterised in that the out-of-window power is used as the cost function.

4.  A method as claimed in claim 1 characterised in that the length and position of the window given the best result,
    when compared with the threshold, is chosen as the channel impulse response estimate.

Fig.1

EP 0 954 142 A1

| TAIL BITS | DATA BITS | TRAINING SEQUENCE | DATA BITS | TAIL BITS | GUARD PERIOD |
|:---:|:---:|:---:|:---:|:---:|:---:|
| 3 | 58 | 26 | 58 | 3 | 8.25 |

Fig. 2.

$\hat{h}(l)$

$\hat{h}_T(l)$

$k$

Fig.3

EP 0 954 142 A1

## European Patent Office

**EUROPEAN SEARCH REPORT**

Application Number

EP 98 30 3326

### DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | EP 0 496 152 A (ROKE MANOR RESEARCH) 29 July 1992 * abstract * * column 3, line 18 - column 5, line 28 * | 1-4 | H04L25/02 |
| A | EP 0 829 988 A (NOKIA TECHNOLOGY GMBH) 18 March 1998 * column 7, line 16 - column 8, line 12 * | 1-4 | |
| D,A | BAIER A ET AL: "Bit synchronization and timing sensitivity in adaptive Viterbi equalizers for narrowband-TDMA digital mobile radio systems" 38TH IEEE VEHICULAR TECHNOLOGY CONFERENCE: 'TELECOMMUNICATIONS FREEDOM - TECHNOLOGY ON THE MOVE' (CAT. NO.88CH2622-9), PHILADELPHIA, PA, USA, 15-17 JUNE 1988, pages 377-384, XP002077506 1988, New York, NY, USA, IEEE, USA | 1-4 | |
| A | WO 90 13187 A (ERICSSON TELEFON AB L M) 1 November 1990 * abstract * * page 26 - page 27 * | 1-4 | TECHNICAL FIELDS SEARCHED (Int.Cl.6) H04L |

The present search report has been drawn up for all claims

| Place of search | Date of completion of the search | Examiner |
|---|---|---|
| THE HAGUE | 21 September 1998 | Koukourlis, S |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

10